# EUROPEAN PATENT APPLICATION

(11) **EP 4 525 498 A1**
(43) Date of publication of application: **19.03.2025**
(21) Application number: 23197793.5
(22) Date of filing: 15.09.2023
(51) Int. Cl.: H04W 12/041, H04W 12/50, H04L 9/40, H04W 84/12

(54) **VLAN SPLICING FOR NETWORK PROTECTION**

(71) Applicant: Nagravision Sàrl, 1033 Cheseaux-sur-Lausanne (CH)
(72) Inventor: Buffard, Christophe, 1033 Cheseaux-sur-Lausanne (CH)
(74) Representative: Ipside

(57) **Abstract**

Aspects of the disclosure provide systems and methods to improve network security using VLAN splicing. A networking device can create multiple VLANs and place different devices on different VLANs. To enable communication between devices on different VLANs, the networking device "splices" two or more VLANs together. When packets originating from a device on a first VLAN are directed to a device on a second VLAN and the two VLANs are spliced together, the networking device processes and forwards the packets. For example, the packets may be decrypted using a decryption key of the first VLAN and encrypted using a decryption key of the second VLAN. For cross-VLAN packets of VLANs that are not spliced together, the networking device drops the packets.

## Description

### FIELD

The embodiments discussed herein are related to virtual local area networks (VLANs). Specifically, the present disclosure addresses systems and methods to protect the security of devices on a local area network (LAN) by using multiple VLANs spliced together.

### BACKGROUND

Multiple devices use a LAN to connect to remote servers via the internet. A malicious device connected to the LAN may be able to attack other devices connected to the LAN. Maintaining security of the LAN (e.g., by limiting access to devices with specific media access control (MAC) addresses or changing a network password periodically) may be time-consuming and difficult.

Today, the house has become a central network node for the family, providing more and more services such as entertainment, home automation, home security, and home office. More and more devices such as tablets, laptops, and various Internet of Things (IoT) devices connect to the home network hub. This provides many new services and increases the number of connected devices into the home to a point where it becomes difficult to identify what are these devices and what services these devices provide. Accordingly, there is a need to improve security on home networks.

### SUMMARY

The present invention provides a networking device and processor implemented method as defined in the appended claims.

### BRIEF DESCRIPTION OF THE DRAWINGS

Example embodiments will be described and explained with additional specificity and detail through the use of the accompanying drawings.
FIG. 1 is a network diagram illustrating a network environment suitable for VLAN splicing for network protection, according to some example embodiments.
FIG. 2 is a block diagram of a router, according to some example embodiments, suitable for VLAN splicing for network protection, according to some example embodiments.
FIG. 3 is a block diagram illustrating a user interface suitable for configuring a router that provides VLAN splicing for network protection, according to some example embodiments.
FIG. 4 is a block diagram illustrating a database schema suitable for use by a router that provides VLAN splicing for network protection, according to some example embodiments.
FIG. 5 is a network diagram illustrating a network environment suitable for VLAN splicing for network protection, according to some example embodiments.
FIG. 6 is a flowchart illustrating operations of a method suitable for providing multiple VLANs for network protection, according to some example embodiments.
FIG. 7 illustrates a diagrammatic representation of a machine in an example form of a computing device within which a set of instructions, for causing the machine to perform any one or more of the methods discussed herein, may be executed.

### DETAILED DESCRIPTION OF THE DRAWINGS

Aspects of the disclosure provide systems and methods to improve network security using VLAN splicing. Existing networks typically connect all devices to a single logical network. As a result, each device can send packets addressed to any other device. A malicious device can perform port scans by sending packets addressed to every port of another device, potentially identifying vulnerabilities.

Instead, a networking device can create multiple VLANs and place different devices on different VLANs. To enable communication between devices on different VLANs, the networking device "splices" two or more VLANs together. When packets originating from a device on a first VLAN are directed to a device on a second VLAN and the two VLANs are spliced together, the networking device processes and forwards the packets. For example, the packets may be decrypted using a decryption key of the first VLAN and encrypted using a decryption key of the second VLAN. For cross-VLAN packets of VLANs that are not spliced together, the router drops the packets.

The networking device may automatically create a new service set identifier (SSID) for a new VLAN for each device that requests to join the network. As a result, every device is isolated automatically and only enabled to communicate with other devices when an administrator splices the VLANs together. By contrast, existing VLAN systems have an administrator manually create each VLAN and assign devices to them. By default, a new device is assigned to an existing VLAN and is enabled to communicate with other devices on the same VLAN.

Using the systems and methods described herein, security of a network is enhanced using automatic VLAN generation and VLAN splicing. Compared to systems that place all devices on a single network, network security is enhanced. Compared to systems that require administrators to manually configure each VLAN, ease of use is improved and, in practice, network security is enhanced by virtue of reduced possibility of human error. VLAN splicing enables devices on multiple VLANs of a single physical network to communicate despite being on separate VLANs.

Networking devices include routers, switches, and hubs. A router connects multiple networks and allows data to pass between them. For example, a home or business router may connect to the internet and to a LAN. A switch connects multiple devices on a single network. For example, a LAN that does not also connect to the internet may use a switch. Routers and switches use destination information to direct data from one port to another. A hub transmits communication data by broadcasting data received on each port of the hub to all other ports of the hub.

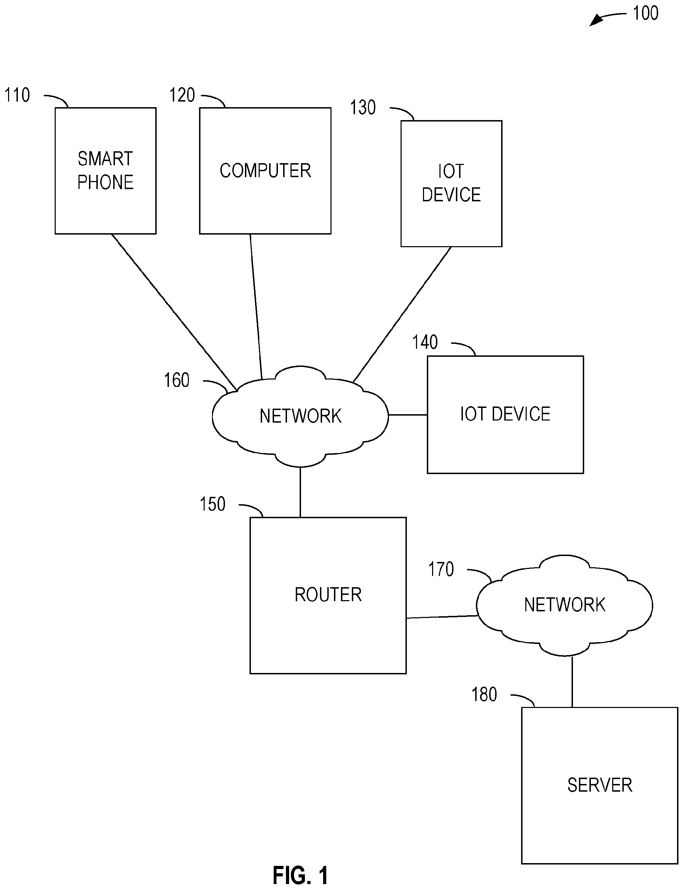

FIG. 1 is a network diagram illustrating a network environment 100 suitable for VLAN splicing for network protection, according to some example embodiments. The network environment 100 includes a smart phone 110, a computer 120, IoT devices 130 and 140, a router 150, networks 160 and 170, and a server 180. The smart phone 110, the computer 120, and the IoT devices 130 and 140 may be collectively referred to as devices 110-140. Though four devices 110-140 of specific types are shown in FIG. 1 as using the router 150, this is merely by way of example. The router 150 can be used to connect any number of devices, including devices of other types than shown in FIG. 1, via the network 160. Likewise, the router 150 can connect to any number of servers 180 via the network 170.

The devices 110-140 may connect to the router 150 using encryption. If the same encryption key is used for all devices, each device may be able to intercept and read packets addressed to other devices. If a different encryption key is used for each device, the privacy of communications for each device with the router 150 is protected. Devices using the same key are both physically and logically on the same LAN. However, devices using different keys, while still physically connected to the same LAN, are effectively prevented from communicating directly with each other. Thus, each distinct encryption key creates a separate VLAN.

The router 150 enables devices on different VLANs to communicate with each other using VLAN splicing. Packets directed from a first device (e.g., the smart phone 110) to a second device (e.g., the IoT device 130) on a different VLAN are detected by the router. The router decrypts the packets using the encryption key for the VLAN of the first device and encrypts the packets using the encryption key for the VLAN of the second device. The re-encrypted packets are then sent to the second device via the network 160. Response packets from the second device that are sent back to the first device are handled the same way.

An administrator of the router 150 may control which VLANs are spliced. Thus, by default, each of the devices 110-140 may be placed on a separate VLAN when they are connected to the router 150, protecting the devices 110-140 from any malicious behavior by other ones of the devices 110-140. Thereafter, the administrator may decide to allow two or more devices to communicate with each other by configuring the router 150 to splice the corresponding VLANs.

Communication between the router 150 and the server 180 may be protected using a different encryption key than for any of the VLANs. Accordingly, inter-network communications by the router 150 may involve decrypting data packets received via one of the networks 160 or 170 and re-encrypting the data using an encryption key. The encryption key corresponds to the receiving device, the network of the receiving device, or the VLAN of the receiving device.

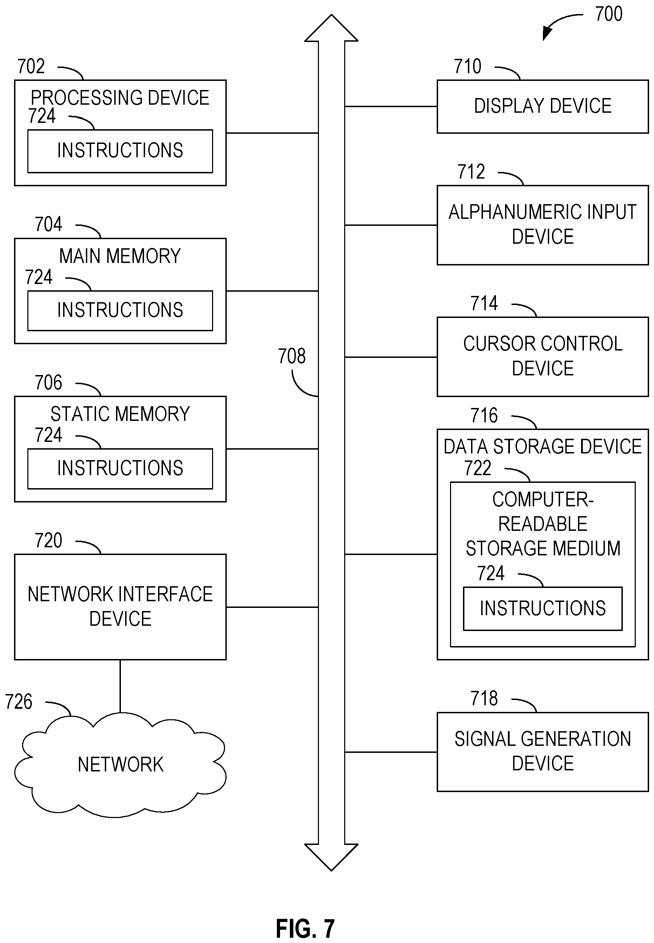

Any of the machines or devices shown in FIG. 1 may be implemented in a general-purpose computer modified (e.g., configured or programmed) by software to be a special-purpose computer to perform the functions described herein for that machine, database, or device. For example, a computer system able to implement any one or more of the methodologies described herein is discussed below with respect to FIG. 7. Any or all of the devices 110-140, the router 150, and the server 180 may include a database or be in communication with a database server that provides access to a database. As used herein, a "database" is a data storage resource and may store data structured as a text file, a table, a spreadsheet, a relational database (e.g., an object-relational database), a triple store, a hierarchical data store, a document-oriented NoSQL database, a file store, or any suitable combination thereof. The database may be an in-memory database. Moreover, any two or more of the machines, databases, or devices illustrated in FIG. 1 may be combined into a single machine, database, or device, and the functions described herein for any single machine, database, or device may be subdivided among multiple machines, databases, or devices.

The devices 110-140 and the router 150 may be connected by the network 160. The server 180 and the router 150 may be connected by the network 170. The networks 160 and 170 may be any network that enables communication between or among machines, databases, and devices. Accordingly, each of the networks 160 and 170 may be a wired network, a wireless network (e.g., a mobile or cellular network), or any suitable combination thereof. Each of the networks 160 and 170 may include one or more portions that constitute a private network, a public network (e.g., the Internet), or any suitable combination thereof.

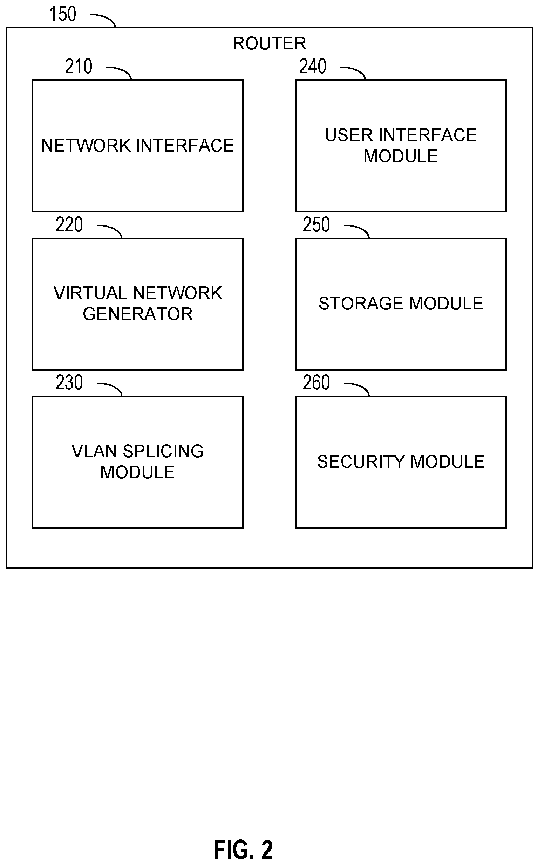

FIG. 2 is a block diagram of the router 150, according to some example embodiments, suitable for VLAN splicing for network protection, according to some example embodiments. The router 150 is shown as including a network interface 210, a virtual network generator 220, a VLAN splicing module 230, a user interface module 240, a storage module 250, and a security module 260, all configured to communicate with each other (e.g., via a bus, shared memory, or a switch). Any one or more of the modules described herein may be implemented using hardware (e.g., a processor of a machine). For example, any module described herein may be implemented by a processor configured to perform the operations described herein for that module. Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices.

The network interface 210 receives data sent to the router 150 and transmits data from the router 150. For example, the network interface 210 may receive packets via the network 160 from the devices 110-140 destined for other ones of the devices 110-140 or the server 180. Likewise, the network interface 210 may receive packets via the network 170 from the server 180 destined for one of the devices 110-140.

The virtual network generator 220 generates SSIDs and encryption keys for VLANs. The generated VLANs are spliced together by the VLAN splicing module 230. Selection of which VLANs are spliced is received via the user interface module 240. The SSIDs, encryption keys, splicing data, computer program instructions, and the like are stored by the storage module 250.

The user interface module 240 generates a user interface for display on a display device (e.g., a display of the smart phone 110 or the computer 120). For example, a web browser implementation of the user interface module 240 generates web content (e.g., hypertext markup language (HTML) files, JavaScript files, cascading style sheets (CSS) data, or any suitable combination thereof) and provides the generated content to the smart phone 110 or the computer 120 for processing by a web browser that generates a user interface based on the web content. A user may interact with the router 150 via the user interface module 240. For example, the user may select options relating to which VLAN new devices should be added to, whether each new device should have a new VLAN generated and used to connect to the network 160, which VLANs should be spliced together, or any suitable combination thereof.

The security module 260 enforces rules on the VLANs. For example, while the use of separate VLANs may prevent an attempted port scan by one device of another device, the attempted port scan may be detected by the security module 260. In response, the security module 260 may disable the VLAN of the device attempting the port scan, preventing the device from engaging in other malicious behaviors. As another example, devices on a particular VLAN may be permitted to communicate only with particular external IP addresses. Any packets sent by a device (i.e., egress packets) to an unauthorized destination are filtered out by the security module 260 and not sent to the destination. Similarly, any packets sent to the device (i.e., ingress packets) from an unauthorized source are filtered out by the security module 260 and not sent to the device.

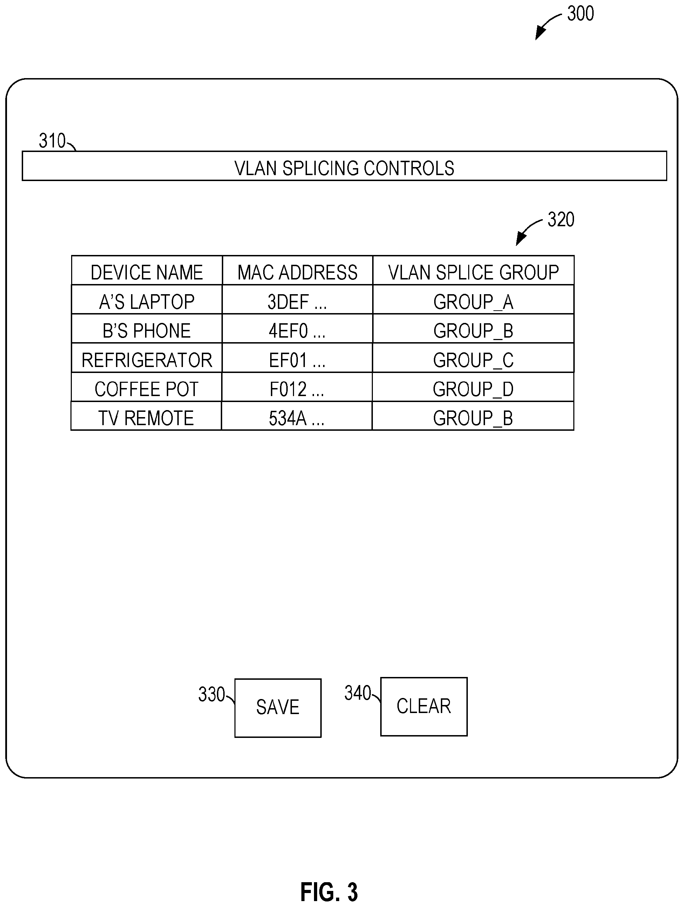

FIG. 3 is a block diagram illustrating a user interface 300 suitable for configuring a router that provides VLAN splicing for network protection (e.g., the router 150 of FIG. 1), according to some example embodiments. The user interface 300 includes a title 310; a table 320; and buttons 330 and 340. The user interface 300 may be generated by the router 150 and displayed on a display device of the smart phone 110 or the computer 120.

The table 320 shows names of devices connected to the router 150, MAC addresses for the devices, and the VLAN splice group for each device. In the example of FIG. 3, each device uses a separate VLAN. Devices that are not in the same VLAN splice group will not be able to communicate using the router 150, since a device will not be able to decrypt packets that were sent using a different VLAN than the device.

The router 150 will receive packets sent from a sending device to a receiving device. The packets will be received on the VLAN of the sending device and, if the VLANs of the two devices are spliced together, send the packets on the VLAN of the receiving device, enabling the devices to communicate. The user interface 300 may enable the user to change the values in the VLAN splice group column of the table 320. After changing the values, the button 330 is operable by the user to save the changes. The button 340 is operable to discard any changes and revert to the saved state.

Thus, the user interface 300 may be provided by the router 150 and comprise a listing of a plurality of devices. The router 150 receives, via the user interface 300, a selection of a subset of the plurality of devices (e.g., B's phone and the TV remote). Based on the selection, the router 150 bridges communications of a plurality of virtual networks identified by the selected subset of the plurality of devices. The bridge provided by the router enables devices connected via different VLANs to communicate with each other without modification to the devices.

In addition to or instead of providing device names, the user interface 300 may provide the SSIDs of the VLANs. Thus, the user of the user interface 300 may select two or more SSIDs for VLANs to be bridged by the router 150. Additional controls may also be shown in the user interface 300. For example, devices may be disconnected from the network and not allowed to reconnect. As another example, detected devices that are not connected to the network may be denied access until individually approved. As still another example, internet traffic of a device may be filtered, throttled, or both.

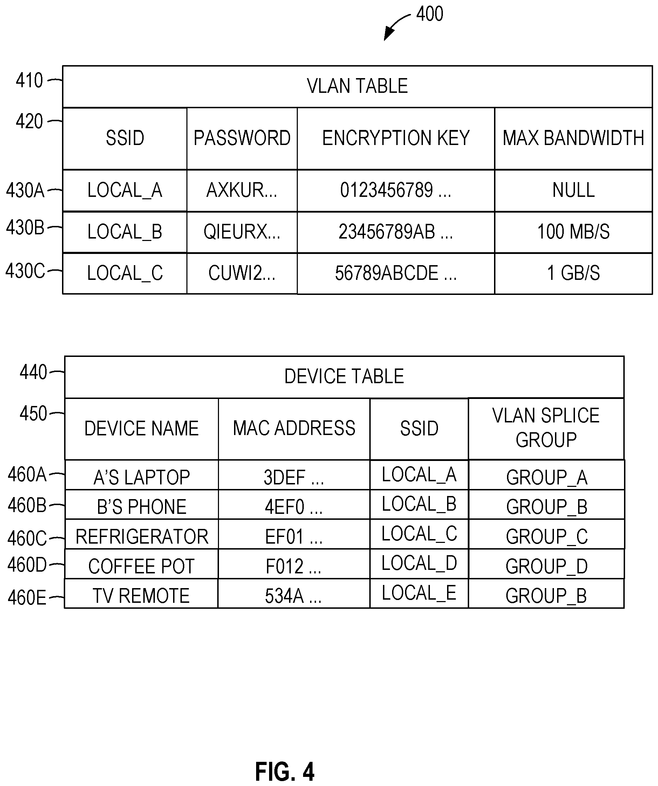

FIG. 4 is a block diagram illustrating a database schema 400 suitable for use by a router that provides VLAN splicing for network protection (e.g., the router 150 of FIG. 1), according to some example embodiments. The database schema 400 includes a VLAN table 410 and a device table 440. The VLAN table 410 includes rows 430A, 430B, and 430C of a format 420. The device table 440 includes rows 460A, 460B, 460C, 460D, and 460E of a format 450. Though only a few rows are shown in each of the tables of the database schema 400, the use of dozens, hundreds, or thousands of rows is contemplated. For example, the VLAN table 410 may include a row for each VLAN created by the router 150. The device table 440 may include a row for each device connected to the router 150 and may also include rows for devices previously connected to the router 150.

Each row 430A-430C of the VLAN table 410 includes an SSID, a password, an encryption key, and a maximum bandwidth. The SSID uniquely identifies the VLAN. A device attempting to access the VLAN provides a password to the router 150. If the password is correct, the device is allowed to join the VLAN. Connected devices receive the encryption key, which is used to encrypt and decrypt packets sent on the VLAN. The maximum bandwidth for the VLAN limits the rate of data that may be sent or received by devices on the VLAN. A value of NULL may indicate that the VLAN has no maximum bandwidth. The maximum bandwidths may be set via a user interface. For example, a VLAN for use by IoT devices may use less bandwidth than a VLAN for use by streaming video devices. Accordingly, setting the maximum bandwidth for the IoT device VLAN to a value commensurate with the expected network usage will allow the security module 260 of FIG. 2 to detect malicious behavior. For example, if an IoT device is hacked and is attempting to aid a distributed denial of services (DDoS) attack, the spike in network usage would exceed the maximum bandwidth value and only a small subset of the malicious packets would be sent. Additionally, the security module 260 may notify an administrator, disconnect the offending device, temporarily disable the VLAN of the offending device, or any suitable combination thereof.

The rows 460A-460C store information for devices connected to the router 150. In the example of FIG. 4, each device has a unique MAC address and uses a different SSID. If the VLAN splice group for two devices is the same, the two devices are enabled to communicate with each other. For example, the rows 460B and 460E indicate that B's phone and the TV remote are both in the VLAN splice group GROUP_B. As a result, the router 150 will convert packets received from one device (e.g., via the VLAN with SSID LOCAL_B) to packets appropriate for receipt by the other device (e.g., via the VLAN with SSID LOCAL_E). The encryption keys stored in the VLAN table 410 may be used for this conversion.

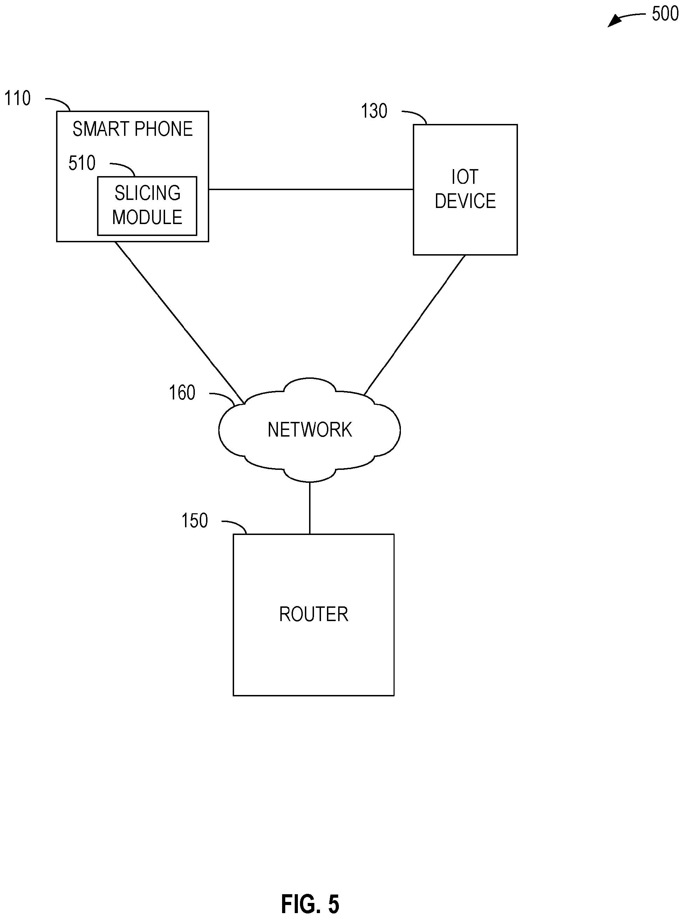

FIG. 5 is a network diagram illustrating a network environment 500 suitable for VLAN splicing for network protection, according to some example embodiments. The network environment 500 may be a portion of the network environment 100 of FIG. 1. The network environment 500 includes the smart phone 110, the IoT device 130, the router 150, and the network 160. The smart phone 110 includes a slicing module 510 (e.g., a hardware module integrated into the smart phone 110 or a software module executing on one or more processors of the smart phone 110).

When the IoT device 130 (e.g., a temperature sensor, a camera, an alarm, or the like) is first introduced to the wireless networking area served by the router 150, the IoT device 130 is not configured with SSID and password information to connect to the router 150. The slicing module 510 enables the smart phone 110 to communicate with the IoT device 130 without the use of the router 150.

The slicing module 510 may send a request to the router 150 to create a new SSID. The slicing module 510 may provide a password for the SSID to the router 150 or may let the router define the password. The router 150 creates a new VLAN using the SSID and password and provides a confirmation to the slicing module that the requested SSID has been created. In some example embodiments, the confirmation includes the SSID, the password, or both.

After receiving the confirmation from the router 150, the slicing module 510 provides the SSID and password to the IoT device 130. For example, the smart phone 110 may provide the SSID and password to the IoT device 130 using a BlueTooth^{®} connection. As another example, the smart phone 110 may encode the SSID and password in a quick response (QR) code and display the QR code on a screen of the smart phone 110. A camera of the IoT device 130 may capture the QR code and determine the SSID and password from the QR code. Using the SSID and password, the IoT device 130 connects to the router 150 and the network 160. The smart phone 110 may continue to connect with the router 150 using a pre-existing SSID and password. Thus, the smart phone 110 and the IoT device 130 will be on different VLANs.

Nonetheless, the smart phone 110 and the IoT device 130 may be able to communicate with each other via the router 150. As discussed with respect to FIG. 1, the router 150 enables devices on different VLANs to communicate with each other using VLAN splicing. If the VLAN used by the smart phone 110 is spliced with the VLAN used by the IoT device 130, the router decrypts the packets sent from one to the other using the encryption key for one VLAN and encrypts the packets using the encryption key for the other VLAN. According to another embodiment, the connection between the smartphone and the IoT device can be via the remote service to which the IoT device is connected. For example for a camera, the remote service receives the data from the camera and the smartphone can pull the data from the remote server.

After requesting the router 150 to create a new VLAN for the IoT device 130, the smart phone 110 has credentials for both the VLANs it was already using and the new VLAN. Using both sets of credentials, the splicing module 510 may request the router 150 to splice the two VLANS. Thus, even though the IoT device 130 is placed on a separate VLAN from the smart phone 110, the IoT device 130 and the smart phone 110 are still able to use the router 150 to communicate.

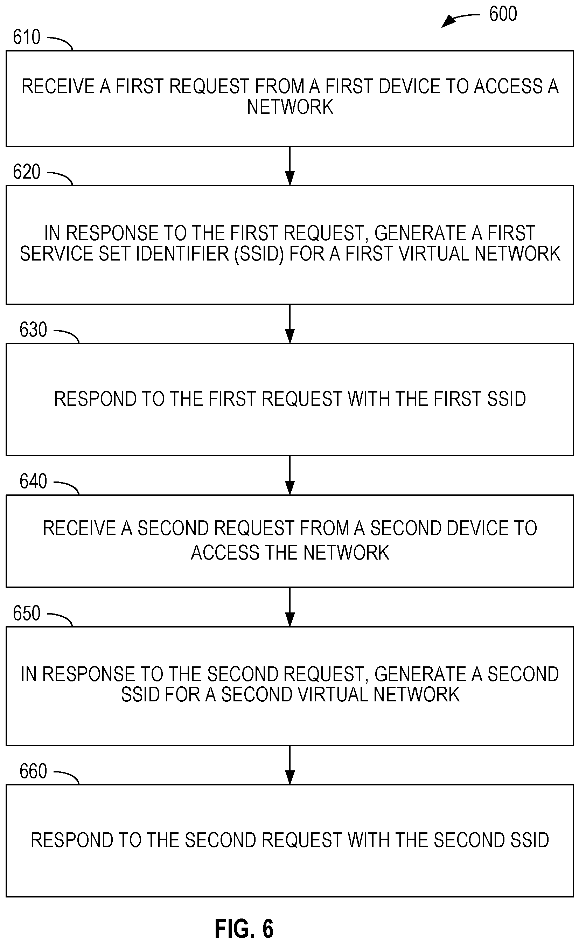

FIG. 6 is a flowchart illustrating operations of a method 600 suitable for providing multiple VLANs for network protection, according to some example embodiments. The method 600 includes operations 610, 620, 630, 640, 650, and 660. By way of example and not limitation, the method 600 is described below as being performed by the router 150 in communication with the devices 110-140, all of FIG. 1.

In operation 610, the router 150 receives a first request from a first device to access a network. For example, the IoT device 130 may, after being powered on, search for local networks and detect one or more SSIDs being broadcast by the router 150. The IoT device 130 sends a request to be added to one of these SSIDs.

Based on the MAC address of the IoT device 130 not matching the MAC address of any device assigned to the SSID (e.g., using the device table 440), the router 150 does not add the IoT device 130 to the requested VLAN. Alternatively, the determination not to add the IoT device 130 to the requested VLAN may be based on a failure of the IoT device 130 to provide the password associated with the requested VLAN. In either case, in operation 620, the router 150 generates, in response to the first request, a first SSID for a first virtual network (e.g., a first VLAN). The generated SSID will be used for a new VLAN for the IoT device 130. Accordingly, the router 150 responds to the first request with the first SSID (operation 630). The device table 440 may be updated to store an association between the first device and the first SSID.

Thereafter, the first device may request to access the network using the first SSID. Based on the association in the device table 440, the router 150 grants the request. In some example embodiments, operation 620 may include generating a password for the first VLAN, an encryption key for the first VLAN, or both. The response sent in operation 630 may include the password, the encryption key, or both.

In operation 640, the router 150 receives a second request from a second device to access the network. For example, the IoT device 140 may sends a request to be added to an existing SSID provided by the router 150.

In either case, in operation 650, the router 150 generates, in response to the second request, a second SSID for a second virtual network (e.g., a second VLAN). The generated SSID will be used for a new VLAN for the IoT device 140. Accordingly, the router 150 responds to the second request with the second SSID (operation 660). The device table 440 may be updated to store an association between the second device and the second SSID.

Thereafter, the second device may request to access the network using the second SSID. Based on the association in the device table 440, the router 150 grants the request. In some example embodiments, operation 650 may include generating a password for the second VLAN, an encryption key for the second VLAN, or both. The response sent in operation 660 may include the password, the encryption key, or both.

In some example embodiments, multiple devices may be assigned to the same VLAN. For example, devices designed to work together may generate a substantial amount of network traffic communicating with each other. Bridging communications on two VLANs uses computation resources of the router 150. Accordingly, placing the devices that are designed to work together on a single VLAN enables the devices to communicate without having packets decrypted and re-encrypted by the router 150. By default, new devices may be connected to the router 150 using new VLANs, but a user interface may be provided that allows an administrator to assign multiple devices to a single VLAN. Thereafter, when a request to connect is received, the device may be connected using the extant VLAN. By way of example, the first device of operations 610-630 and a third device may be assigned to the same VLAN. The router 150 may receive a third request from a third device to access the network and respond to the third request with the first SSID and the first key.

Thus, by virtue of the method 600, the router 150 is enabled to respond to connection requests from multiple devices with different network information. Using the different network information, the multiple devices are enabled to communicate with the router 150 using separate VLANs. This enables secure communication between the devices and the router 150, without exposing the devices to malicious behavior even from other devices accepted by the router 150.

For this and other processes and methods disclosed herein, the functions performed in the processes and methods may be implemented in differing order. Further, the outlined steps and operations are only provided as examples, and some of the steps and operations may be optional, combined into fewer steps and operations, or expanded into additional steps and operations without detracting from the essence of the disclosed embodiments.

FIG. 7 illustrates a diagrammatic representation of a machine in the example form of a computing device 700 within which a set of instructions, for causing the machine to perform any one or more of the methods discussed herein, may be executed. The computing device 700 may include a mobile phone, a smart phone, a netbook computer, a rackmount server, a router computer, a server computer, a personal computer, a mainframe computer, a laptop computer, a tablet computer, a desktop computer, etc., within which a set of instructions, for causing the machine to perform any one or more of the methods discussed herein, may be executed. In alternative embodiments, the machine may be connected (e.g., networked) to other machines in a LAN, an intranet, an extranet, or the Internet. The machine may operate in the capacity of a server machine in a client-server network environment. The machine may include a personal computer (PC), a set-top box (STB), a server, a network router, a network switch, a network bridge, or any machine capable of executing a set of instructions (sequential or otherwise) that specify actions to be taken by that machine. Further, while only a single machine is illustrated, the term "machine" may also include any collection of machines that individually or jointly execute a set (or multiple sets) of instructions to perform any one or more of the methods discussed herein.

The example computing device 700 includes a processing device (e.g., a processor) 702, a main memory 704 (e.g., read-only memory (ROM), flash memory, dynamic random access memory (DRAM) such as synchronous DRAM (SDRAM)), a static memory 706 (e.g., flash memory, static random access memory (SRAM)), and a data storage device 716, which communicate with each other via a bus 708.

The processing device 702 represents one or more general-purpose processing devices such as a microprocessor, central processing unit, or the like. More particularly, the processing device 702 may include a complex instruction set computing (CISC) microprocessor, reduced instruction set computing (RISC) microprocessor, very long instruction word (VLIW) microprocessor, or a processor implementing other instruction sets, or processors implementing a combination of instruction sets. The processing device 702 may also include one or more special-purpose processing devices such as an application specific integrated circuit (ASIC), a field programmable gate array (FPGA), a digital signal processor (DSP), a network processor, or the like. The processing device 702 is configured to execute instructions 724 for performing the operations and steps discussed herein.

The computing device 700 may further include a network interface device 720 which may communicate with a network 726. The computing device 700 also may include a display device 710 (e.g., a liquid crystal display (LCD) or a cathode ray tube (CRT)), an alphanumeric input device 712 (e.g., a keyboard), a cursor control device 714 (e.g., a mouse), and a signal generation device 718 (e.g., a speaker). In one implementation, the display device 710, the alphanumeric input device 712, and the cursor control device 714 may be combined into a single component or device (e.g., an LCD touch screen).

The data storage device 716 may include a computer-readable storage medium 722 on which is stored one or more sets of instructions 724 embodying any one or more of the methods or functions described herein. The instructions 724 may also reside, completely or at least partially, within the main memory 704 and/or within the processing device 702 during execution thereof by the computing device 700, the main memory 704 and the processing device 702 also constituting computer-readable media. The instructions 724 may further be transmitted or received over the network 726 via the network interface device 720.

While the computer-readable storage medium 722 is shown in an example embodiment to be a single medium, the term "computer-readable storage medium" may include a single medium or multiple media (e.g., a centralized or distributed database and/or associated caches and servers) that store the one or more sets of instructions. The term "computer-readable medium" may also include any medium that is capable of storing, encoding, or carrying a set of instructions for execution by the machine and that cause the machine to perform any one or more of the methods of the present disclosure. The term "computer-readable storage medium" may accordingly be taken to include, but not be limited to, solid-state memories, optical media, and magnetic media. The term "computer readable medium" includes both a storage media and transient media, such as signals carrying the instructions.

Terms used herein and especially in the appended claims (e.g., bodies of the appended claims) are generally intended as "open" terms (e.g., the term "including" may be interpreted as "including, but not limited to," the term "having" may be interpreted as "having at least," the term "includes" may be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases may not be construed to imply that the introduction of a claim recitation by the indefinite articles "a" or "an" limits any particular claim containing such an introduced claim recitation to embodiments containing only one such recitation, even when the same claim includes the introductory phrases "one or more" or "at least one" and indefinite articles such as "a" or "an" (e.g., "a" and/or "an" may be interpreted to mean "at least one" or "one or more"); the same holds true for the use of definite articles used to introduce claim recitations.

In addition, even if a specific number of an introduced claim recitation is explicitly recited, those skilled in the art will recognize that such a recitation may be interpreted to mean at least the recited number (e.g., the bare recitation of "two recitations," without other modifiers, means at least two recitations, or two or more recitations). Further, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, may be understood to contemplate the possibilities of including one of the terms, some of the terms, or all of the terms. For example, the phrase "A or B" may be understood to include the possibilities of "A" or "B" or "A and B."

Embodiments described herein may be implemented using computer-readable media for carrying or having stored thereon computer-executable instructions or data structures. Such computer-readable media may be any available media that may be accessed by a general-purpose or special-purpose computer. By way of example, and not limitation, such computer-readable media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid-state memory devices), or any other storage medium which may be used to carry or store desired program code in the form of computer-executable instructions or data structures and which may be accessed by a general-purpose or special-purpose computer. Combinations of the above may also be included within the scope of computer-readable media.

Computer-executable instructions may include, for example, instructions and data which cause a general-purpose computer, special-purpose computer, or special-purpose processing device (e.g., one or more processors) to perform a certain function or group of functions. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

As used herein, the terms "module" or "component" may refer to specific hardware implementations configured to perform the operations of the module or component and/or software objects or software routines that may be stored on and/or executed by general-purpose hardware (e.g., computer-readable media, processing devices, etc.) of the computing system. In some embodiments, the different components, modules, engines, and services described herein may be implemented as objects or processes that execute on the computing system (e.g., as separate threads). While some of the system and methods described herein are generally described as being implemented in software (stored on and/or executed by general-purpose hardware), specific hardware implementations or a combination of software and specific hardware implementations are also possible and contemplated.

All examples and conditional language recited herein are intended as pedagogical objects to aid the reader in understanding the inventive subject matter and the concepts contributed by the inventor to furthering the art, and are to be construed as being without limitation to such specifically recited examples and conditions. Although embodiments of the present disclosure have been described in detail, it may be understood that various changes, substitutions, and alterations may be made thereto without departing from the scope of the present disclosure.

Example 1 is a networking device comprising: one or more processors; a memory that stores instructions that, when executed by the one or more processors, cause the one or more processors to perform operations comprising: in response to receiving a first request from a first device to access a network, generating a first service set identifier (SSID) and a first key for a first virtual network; responding to the first request with the first SSID and the first key; in response to receiving a second request from a second device to access the network, generating a second SSID and a second key for a second virtual network; and responding to the second request with the second SSID and the second key.

In Example 2, the subject matter of Example 1, wherein the operations further comprise: in response to receiving, via the first virtual network, a third request from the first device to generate a third SSID and a third key for a third virtual network, generating the third SSID and the third key; responding to the third request with a confirmation that the third SSID has been created; and receiving a fourth request from a third device to access the network using the third SSID and the third key.

In Example 3, the subject matter of Examples 1-2, wherein the operations further comprise: receiving a communication from the first device via the first virtual network, the communication being addressed to the second device; and sending the communication to the second device via the second virtual network.

In Example 4, the subject matter of Examples 1-3, wherein the operations further comprise: providing a user interface that comprises a listing of a plurality of SSIDs, the plurality of SSIDs including the first SSID and the second SSID; receiving, via the user interface, a selection of a subset of the plurality of SSIDs; and based on the selection, bridging communications of a plurality of virtual networks identified by the selected subset of the plurality of SSIDs.

In Example 5, the subject matter of Examples 1-4, wherein the first device is an internet of things (IoT) device.

In Example 6, the subject matter of Examples 1-5, wherein the operations further comprise: in response to detecting an attempt by the first device to scan the network, disabling the first virtual network.

In Example 7, the subject matter of Examples 1-6, wherein the operations further comprise: allocating a different amount of bandwidth of the network to the first virtual network and to the second virtual network.

In Example 8, the subject matter of Examples 1-7, wherein the operations further comprise: receiving a third request from a third device to access the network; and responding to the third request with the first SSID and the first key.

Example 9 is a method comprising: in response to receiving a first request from a first device to access a network, generating, by one or more processors, a first service set identifier (SSID) and a first key for a first virtual network; responding to the first request with the first SSID and the first key; in response to receiving a second request from a second device to access the network, generating a second SSID and a second key for a second virtual network; and responding to the second request with the second SSID and the second key.

In Example 10, the subject matter of Example 9 includes, in response to receiving, via the first virtual network, a third request from the first device to generate a third SSID and a third key for a third virtual network, generating the third SSID and the third key; responding to the third request with a confirmation that the third SSID has been created; and receiving a fourth request from a third device to access the network using the third SSID and the third key.

In Example 11, the subject matter of Examples 9-10 includes receiving a communication from the first device via the first virtual network, the communication being addressed to the second device; and sending the communication to the second device via the second virtual network.

In Example 12, the subject matter of Examples 9-11 includes providing a user interface that comprises a listing of a plurality of SSIDs, the plurality of SSIDs including the first SSID and the second SSID; receiving, via the user interface, a selection of a subset of the plurality of SSIDs; and based on the selection, bridging communications of a plurality of virtual networks identified by the selected subset of the plurality of SSIDs.

In Example 13, the subject matter of Examples 9-12 includes, in response to detecting an attempt by the first device to scan the network, disabling the first virtual network.

In Example 14, the subject matter of Examples 9-13 includes allocating a different amount of bandwidth of the network to the first virtual network and to the second virtual network.

In Example 15, the subject matter of Examples 9-14 includes receiving a third request from a third device to access the network; and responding to the third request with the first SSID and the first key.

Example 16 is a non-transitory machine-readable medium storing instructions that, when executed by one or more processors of a networking device, cause the networking device to perform operations comprising: in response to receiving a first request from a first device to access a network, generating a first service set identifier (SSID) and a first key for a first virtual network; responding to the first request with the first SSID and the first key; in response to receiving a second request from a second device to access the network, generating a second SSID and a second key for a second virtual network; and responding to the second request with the second SSID and the second key.

In Example 17, the subject matter of Example 16, wherein the operations further comprise: receiving a communication from the first device via the first virtual network, the communication being addressed to the second device; and sending the communication to the second device via the second virtual network.

In Example 18, the subject matter of Examples 16-17, wherein the operations further comprise: providing a user interface that comprises a listing of a plurality of SSIDs, the plurality of SSIDs including the first SSID and the second SSID; receiving, via the user interface, a selection of a subset of the plurality of SSIDs; and based on the selection, bridging communications of a plurality of virtual networks identified by the selected subset of the plurality of SSIDs.

In Example 19, the subject matter of Examples 16-18, wherein the operations further comprise: in response to detecting an attempt by the first device to scan the network, disabling the first virtual network.

In Example 20, the subject matter of Examples 16-19, wherein the operations further comprise: allocating a different amount of bandwidth of the network to the first virtual network and to the second virtual network.

Example 21 is at least one machine-readable medium including instructions that, when executed by processing circuitry, cause the processing circuitry to perform operations to implement any of Examples 1-20.

Example 22 is an apparatus comprising means to implement any of Examples 1-20.

Example 23 is a system to implement any of Examples 1-20.

Example 24 is a method to implement any of Examples 1-20.

## Claims

1. A networking device comprising:
one or more processors;
a memory that stores instructions that, when executed by the one or more processors, cause the one or more processors to perform operations comprising:
in response to receiving a first request from a first device to access a network, generating a first service set identifier "SSID" and a first key for a first virtual network;
responding to the first request with the first SSID and the first key;
in response to receiving a second request from a second device to access the network, generating a second SSID and a second key for a second virtual network; and
responding to the second request with the second SSID and the second key.

2. The networking device of claim 1, wherein the operations further comprise:
in response to receiving, via the first virtual network, a third request from the first device to generate a third SSID and a third key for a third virtual network, generating the third SSID and the third key;
responding to the third request with a confirmation that the third SSID has been created; and
receiving a fourth request from a third device to access the network using the third SSID and the third key.

3. The networking device of claim 1 or claim 2, wherein the operations further comprise:
receiving a communication from the first device via the first virtual network, the communication being addressed to the second device; and
sending the communication to the second device via the second virtual network.

4. The networking device of any one of claims 1 to 3, wherein the operations further comprise:
providing a user interface that comprises a listing of a plurality of SSIDs, the plurality of SSIDs including the first SSID and the second SSID;
receiving, via the user interface, a selection of a subset of the plurality of SSIDs; and
based on the selection, bridging communications of a plurality of virtual networks identified by the selected subset of the plurality of SSIDs.

5. The networking device of any one of claims 1 to 4, wherein the first device is an internet of things "IoT" device.

6. The networking device of any one of claims 1 to 5, wherein the operations further comprise:
in response to detecting an attempt by the first device to scan the network, disabling the first virtual network.

7. The networking device of any one of claims 1 to 6, wherein the operations further comprise:
allocating a different amount of bandwidth of the network to the first virtual network and to the second virtual network.

8. The networking device of any one of claims 1 to 7, wherein the operations further comprise:
receiving a third request from a third device to access the network; and
responding to the third request with the first SSID and the first key.

9. A processor implemented method comprising:
in response to receiving a first request from a first device to access a network, generating a first service set identifier "SSID" and a first key for a first virtual network;
responding to the first request with the first SSID and the first key;
in response to receiving a second request from a second device to access the network, generating a second SSID and a second key for a second virtual network; and responding to the second request with the second SSID and the second key.

10. The method of claim 9, further comprising:
in response to receiving, via the first virtual network, a third request from the first device to generate a third SSID and a third key for a third virtual network, generating the third SSID and the third key;
responding to the third request with a confirmation that the third SSID has been created; and
receiving a fourth request from a third device to access the network using the third SSID and the third key.

11. The method of claim 9 or claim 10, further comprising:
receiving a communication from the first device via the first virtual network, the communication being addressed to the second device; and
sending the communication to the second device via the second virtual network.

12. The method of any one of claims 9 to 11, further comprising:
providing a user interface that comprises a listing of a plurality of SSIDs, the plurality of SSIDs including the first SSID and the second SSID;
receiving, via the user interface, a selection of a subset of the plurality of SSIDs; and
based on the selection, bridging communications of a plurality of virtual networks identified by the selected subset of the plurality of SSIDs.

13. The method of any one of claims 9 to 12, further comprising:
in response to detecting an attempt by the first device to scan the network, disabling the first virtual network.

14. The method of any one of claims 9 to 13, further comprising:
allocating a different amount of bandwidth of the network to the first virtual network and to the second virtual network.

15. A machine-readable medium carrying instructions that, when executed by one or more processors of a networking device, cause the networking device to perform the method of any one of claims 9-14.
